# EUROPÄISCHE PATENTSCHRIFT

(11) **EP 4 448 156 B1**
(45) Veröffentlichungstag und Bekanntmachung des Hinweises auf die Patenterteilung: **26.11.2025**
(21) Anmeldenummer: 22840580.9
(22) Anmeldetag: 15.12.2022
(51) Int. Cl.: B01J 4/00, B01J 4/02, B01J 19/12, B01J 19/24, B33Y 30/00, B29C 35/08

(54) **VORRICHTUNG ZUM VORAKTIVIEREN UND DOSIEREN EINER AKTINISCH HÄRTBAREN MASSE UND VERWENDUNG DER VORRICHTUNG**
DEVICE FOR PRE-ACTIVATING AND METERING AN ACTINICALLY CURABLE MASS, AND USE OF THE DEVICE
DISPOSITIF DE PRÉ-ACTIVATION ET DE MESURE DE MASSE DURCISSABLE PAR VOIE ACTINIQUE ET UTILISATION DU DISPOSITIF

(30) Priorität: 17.12.2021 DE 102021133731
(43) Veröffentlichungstag der Anmeldung: 23.10.2024
(73) Patentinhaber: DELO Industrie Klebstoffe GmbH & Co. KGaA, 86949 Windach (DE)
(72) Erfinder: STUMBECK, Michael, 86949 Windach (DE); BRENDEL, Martin, 86949 Windach (DE); OSWALD, Michael, 86949 Windach (DE); TRONDT, Uwe, 86949 Windach (DE); SCHLERETH, Maximilian, 86949 Windach (DE)
(74) Vertreter: Prinz & Partner mbB
(86) Internationale Anmeldenummer: PCT/EP2022/086211
(87) Internationale Veröffentlichungsnummer: WO 2023/111209

(56) Entgegenhaltungen:
- EP-A1- 0 508 046
- WO-A1-2016/154615
- WO-A1-2019/014770
- CN-A- 107 053 654

## Beschreibung

Die Erfindung betrifft eine Vorrichtung zum Voraktivieren und Dosieren einer aktinisch härtbaren Masse sowie die Verwendung der Vorrichtung mit einer polymerisierbaren Masse.

Es ist bekannt, härtbare Massen durch Bestrahlung zu aktivieren, um einen Aushärteprozess auszulösen. Ein Anwendungsfall ist beispielsweise das sogenannte Flip-Chip Verfahren zur (elektrischen) Kontaktierung von Halbleiterelementen mit Leiterplatten. Hierbei wird zunächst auf der Unterseite eines Chips eine voraktivierbare Masse aufgetragen, die durch Bestrahlung mit aktinischer Strahlung aktiviert wird. Anschließend kann der Chip innerhalb der Offenzeit mit der Leiterplatte und wahlweise mit elektrischen Leiterbahnen in Kontakt gebracht werden. Die Endaushärtung kann durch Wärme beschleunigt werden. Ein derartiges Verfahren wird beispielsweise in der DE 10 232 636 A1 beschrieben. Eine Voraktivierung der Masse stellt sicher, dass die Masse auch in Bereichen die nicht durch aktinische Strahlung zugänglich sind, aushärten kann.

Bei der Voraktivierung wird der härtbaren Masse durch die Bestrahlung mit aktinischer Strahlung Wärme zugeführt. Da sich die härtbare Masse im Kanal in einem Volumenstrom fortbewegt, besteht im Normalbetrieb in der Regel ein sich selbst kühlendes System. Steigt jedoch die Viskosität der härtbaren Masse an, so wird in der Dosiereinheit mehr Druck aufgebaut, um einen gleichbleibenden Volumenstrom und ein gleichbleibendes Dosiervolumen gewährleisten zu können. Wird die Viskosität zu hoch, veranlasst ein Drucksensor in der Dosiereinheit, dass diese abgeschaltet wird. Führen die Beleuchtungseinheiten dem System weiterhin Wärme zu, kann diese durch den Volumenstrom nicht mehr abtransportiert werden. Die Temperatur steigt folglich stark an, so dass es zur Selbstentzündung der härtbare Masse kommen kann.

Unter ungünstigen Bedingungen erwärmt sich die härtbare Masse bereits während des Normalbetriebs, wodurch es unter Umständen ebenfalls zu einer Selbstentzündung der härtbaren Masse kommen kann. Beide Szenarien können zu einer Beschädigung von Teilen der Applikationsvorrichtung führen.

Die DE 37 02 999 A1 beschreibt ein Verfahren und eine Vorrichtung zur Verarbeitung von kationisch polymerisierbaren Harzmassen. Die Offenbarung sieht eine Apparatur zur Bestrahlung vor, die im Bestrahlungsbereich über einen kapillaren Bestrahlungsraum und einen diesem zugeordneten Reflektor verfügt. Eine Kühlung oder sonstige Sicherungsmaßnahmen werden nicht beschrieben.

Die EP 0 508 046 A1 offenbart ein Bestrahlungsgerät für polymerisierbare Flüssigkeiten. Wesentlich ist eine mittels einer Kühlflüssigkeit aktiv gekühlte Rohrleitung, die eine Mischeinrichtung aufweist, welche eine möglichst homogene Voraktivierung der polymerisierbaren Flüssigkeiten gewährleisten soll. Eine derartige Kühlung ist zwar wirkungsvoll, aber mit hohem Aufwand und erhöhtem Bauraumbedarf verbunden.

In der DE 10 2007 017 842 B4 wird eine Vorrichtung zum Aktivieren einer polymerisierbaren Masse beschrieben, deren Aufgabe eine homogenere Bestrahlung und Aktivierung gegenüber dem Stand der Technik ist. Sicherheitsaspekte, insbesondere eine Kühlung, werden hierbei nicht thematisiert.

Es ist daher eine Aufgabe der Erfindung, eine Selbstentzündung der härtbaren Masse, insbesondere ohne Temperatursensor, im Fehlerfall zu vermeiden und eine unterstützende Kühlung im Normalbetrieb zu gewährleisten.

Diese Aufgabe wird erfindungsgemäß gelöst durch eine Vorrichtung zum Voraktivieren und Dosieren einer aktinisch härtbaren Masse, insbesondere einer polymerisierbaren Masse. Die Vorrichtung umfasst eine Dosiereinheit zum Einstellen eines Volumenstroms der härtbaren Masse, einen Kanal zum Führen der härtbaren Masse zu einer Austrittsdüse, und eine Bestrahlungseinheit, die aktinische Strahlung zum Voraktivieren der aktinisch härtbaren Masse ausstrahlt. Der Kanal ist zumindest in einem Fensterabschnitt strahlendurchlässig für die aktinische Strahlung der Bestrahlungseinheit, wobei die Bestrahlungseinheit dem strahlendurchlässigen Fensterabschnitt des Kanals zugeordnet ist. Die Vorrichtung weist eine Hülse auf, die ebenfalls zumindest teilweise aus einem strahlendurchlässigen Material für die aktinische Strahlung gebildet ist und den Kanal zumindest in dem Bereich umgibt, dem die Bestrahlungseinheit zugeordnet ist. Die Vorrichtung weist außerdem eine thermisch leitfähige Halterung auf, in welcher der Kanal und die Hülse gehalten sind, wobei die thermisch leitfähige Halterung den Kanal und die Hülse umfangsmäßig umgibt und mindestens ein strahlendurchlässiges Fenster hat, das der Bestrahlungseinheit zugeordnet ist.

Die im Fehlerfall oder Normalbetrieb entstehende Wärme kann somit vom Kanal auf die Hülse übertragen werden, die von der thermisch leitfähigen Halterung gehalten ist, wodurch die Hülse zumindest in thermischem Kontakt mit der Halterung steht. Insofern kann die bei der Voraktivierung entstehende Wärme, welche an die Hülse übertragen wird, über die thermisch leitfähige Halterung abgeführt und an die Umgebung abgegeben werden. Die thermisch leitfähige Halterung bildet folglich einen (indirekten) Kühlkörper, über den die bei der Voraktivierung entstehende Wärme möglichst schnell vom Kanal weg geleitet werden kann. Der Kanal wird somit kontinuierlich indirekt gekühlt. Dadurch wird verhindert, dass sich die härtbare Masse bis zu einer Entzündungstemperatur erwärmen kann, wodurch ein Applikationsprozess besonders sicher und zuverlässig stattfinden kann. Insbesondere werden Ausfallzeiten und Wartungsarbeiten vermieden. Auch müssen keine Kühlpausen oder ähnliches eingelegt werden, sodass der Applikationsprozess effizienter durchgeführt werden kann. Darüber hinaus kann die Temperatur der voraktivierten Masse in einem Bereich gehalten werden, der für die Applikation der Masse optimal ist.

Der Kanal ist beispielsweise aus einem chemisch inerten Kunststoff wie Polypropylen oder Polytetrafluorethylen oder aus Glas gebildet. Diese Materialien haben eine hohe chemische Beständigkeit. Insbesondere können kostengünstige Mischrohre zum Einsatz kommen, wie sie in hohen Stückzahlen, beispielsweise von der Firma Sulzer Mixpac, hergestellt werden.

Die weiteren Bestandteile der Vorrichtung, die ebenfalls mit der härtbaren Masse in Kontakt kommen, sind vorzugsweise aus einem Material gebildet, das resistent gegen abrasive Füllstoffe und chemikalienresistent ist.

Die Halterung ist beispielsweise aus Kupfer, Aluminium oder Eisen gebildet. Diese Materialien haben eine besonders hohe thermische Leitfähigkeit. Besonders bevorzugt ist die Halterung aus Aluminium gebildet, da Aluminium kostengünstiger ist als Kupfer und es eine bessere thermische Leitfähigkeit hat als Eisen hat.

Gemäß einer Variante ist die Halterung aus Aluminium gebildet, welches eine thermische Leitfähigkeit zwischen 140 und 160 W/m*K hat.

Grundsätzlich kann die Halterung aus einem Material gebildet sein, das eine thermische Leitfähigkeit von mehr als 10 W/m*K aufweist. Eine solche thermische Leitfähigkeit stellt sicher, dass die bei der Voraktivierung entstehende Wärme in ausreichendem Maße an die Umgebung abgegeben werden kann, um die härtbare Masse unterhalb der jeweiligen Entzündungstemperatur zu halten.

Die thermische Leitfähigkeit des Aufbaus nimmt vorzugsweise von innen nach außen hin zu. Das heißt, dass die Halterung eine höhere thermische Leitfähigkeit als die Hülse hat, wobei diese wiederum eine höhere thermische Leitfähigkeit als der Kanal hat.

Durch die besonders hohe thermische Leitfähigkeit der Halterung entsteht zwischen dem Kanal und der Halterung ein Gefälle hinsichtlich der thermischen Leitfähigkeit, was die Wärmeableitung vom Kanal nach außen hin begünstigt.

Der Kanal ist beispielsweise aus Polypropylen mit einer thermischen Leitfähigkeit von 0,25 W/m*K gebildet, während die Hülse aus einem Material mit einer thermischen Leitfähigkeit von mindestens 1 W/m*K gebildet ist.

Gemäß einer Variante ist die Hülse ein Glasrohr, insbesondere aus einem optischen Glas.

Die Wandstärke der Hülse beträgt beispielsweise zwischen 0,5 mm und 10 mm. Insbesondere hat die Hülse eine Wandstärke von mindestens 1 mm.

Das mindestens eine strahlendurchlässige Fenster der Halterung ist insbesondere eine Aussparung in der Halterung. Die von der Bestrahlungseinheit abgegebenen Strahlen werden somit zumindest im Bereich der Fenster nicht durch die Halterung abgeschirmt. Das mindestens eine Fenster kann eine Ausnehmung in dem die Halterung bildenden Material sein.

Vorzugsweise hat die Halterung mehrere strahlendurchlässige Fenster, die in Umfangsrichtung des Kanals verteilt sind. Dies trägt zu einer möglichst homogenen Bestrahlung der härtbaren Masse bei.

Im Idealfall erfolgt eine Bestrahlung entlang eines gesamten Umfangs des Kanals, insbesondere in homogener Weise.

Die mehreren strahlendurchlässigen Fenster können (im Wesentlichen) äquidistant in Bezug auf den Umfang des Kanals vorgesehen sein, insbesondere die mehreren strahlendurchlässigen Fenster zusammen mit einem Befestigungssteg der Halterung.

Vorzugsweise ist in dem Kanal eine Mischvorrichtung angeordnet, die ausgebildet ist, die härtbare Masse im Kanal umzuwälzen. Durch die Mischvorrichtung wird eine Laminarströmung im Kanal vermieden, sodass eine homogene Bestrahlung aller Volumenanteile der härtbaren Masse stattfinden kann. Konkret wird durch die Durchmischung eine Strömungsbewegung erzeugt, wodurch alle Volumenanteile der härtbaren Masse wiederholt an die Innenwandung des Kanals befördert und dort mit einer größeren Intensität bestrahlt werden.

Die Mischvorrichtung umfasst beispielsweise eine Helixwendel. Alternativ oder zusätzlich kann die Mischvorrichtung einen oder mehrere Strömungsbrecher aufweisen.

Zwischen der Hülse und dem Kanal ist insbesondere ein Spalt gebildet. Dadurch ist eine Wärmedehnung des Kanals möglich.

Beispielsweise ist der Spalt zwischen einer Außenwandung des Kanals und einer Innenwandung der Hülse kleiner als 1,0 mm, insbesondere kleiner als 0,2 mm. Dieser Abstand bezieht sich auf einen Zustand, in dem die Vorrichtung nicht in Betrieb ist und Umgebungstemperatur hat. Ein Luftvolumen zwischen Kanal und Hülse ist somit sehr gering, wodurch eine zusätzliche Absicherung für den Fall realisiert ist, dass es trotz der Wärmeableitung durch die Halterung zu einer Selbstentzündung der härtbaren Masse kommen sollte. Insbesondere wird durch das geringe Luftvolumen eine zusätzliche Sicherheitsstufe realisiert, da eine möglicherweise auftretende Flamme aufgrund des geringen Luftvolumens direkt erstickt würde. Darüber hinaus dient der Abstand auch als Toleranzausgleich und ermöglicht eine leichte Montage der Hülse an dem Kanal.

Der Kanal kann aus einem Material gebildet sein, welches aufgrund der aktinischen Strahlung der Bestrahlungseinheit eine derartige thermische Ausdehnung erfährt, dass der Kanal zumindest teilweise formschlüssig und/oder kraftschlüssig an der Hülse zusammenwirkt, beispielsweise zumindest teilweise (direkt) an der Hülse anliegt, insbesondere sich mit der Hülse dann form- und/oder kraftschlüssig verbindet. In diesem Fall ist eine Wärmeübertragung von dem Kanal auf die Hülse verbessert. Genauer gesagt verschwindet der isolierend wirkende Spalt zwischen dem Kanal und der Hülse zumindest bereichsweise aufgrund der Ausdehnung des Kanals.

Der Kanal kann einen runden, eckigen, ovalen oder anders geformten Querschnitt haben. Beispielsweise hat der Querschnitt die Form eines Dreiecks, eines Trapezes, eines Rechtecks, eines Quadrats, eines Kreises oder eines Ovals.

Je nachdem, wie die Querschnitte des Kanals und der Hülse gewählt sind, kann der Kanal im Betrieb der Vorrichtung, also in erwärmtem Zustand, mit seiner Außenwand vollflächig oder nur bereichsweise an einer Innenwand der Hülse anliegen, beispielsweise in Form von zumindest eines Linienkontakts parallel zur Längsachse des Kanals. Auf diese Weise lässt sich ein Wärmeabfluss vom Kanal durch die Wahl einer Geometrie von Kanal und Hülse gezielt beeinflussen.

Beispielsweise kann die Hülse ebenfalls einen runden, eckigen, ovalen oder anders geformten Querschnitt haben. Insofern kann der Querschnitt die Form eines Dreiecks, eines Trapezes, eines Rechtecks, eines Quadrats, eines Kreises oder eines Ovals haben.

Die Form der Hülse und die Form des Kanals können gleich sein, sodass die Hülse und der Kanal beide beispielsweise einen kreisförmigen Querschnitt haben. Es kann aber auch vorgesehen sein, dass die Formen unterschiedlich sind, sodass beispielsweise ein Kanal mit dreieckigem Querschnitt in einer Hülse mit kreisförmigem Querschnitt aufgenommen ist. Grundsätzlich sind verschiedene Konstellationen hinsichtlich der Querschnitte denkbar.

Die Bestrahlungseinheit ist beispielsweise eingerichtet, Licht mit einer Wellenlänge im Bereich von 200 nm bis 1200 nm abzugeben. In diesem Wellenlängenbereich findet eine zuverlässige Voraktivierung der härtbaren Masse statt. Die Wellenlänge des Lichts liegt insbesondere in einem Bereich zwischen 250 nm und 1000 nm, vorzugsweise im Bereich zwischen 300 nm und 800 nm. Bevorzugte Wellenlängen sind beispielsweise 365 nm, 400 nm oder 460 nm. Die verwendete Wellenlänge kann dabei in einem Toleranzbereich von 10 nm liegen-Demnach kann die Wellenlänge in einem Bereich von 355 nm bis 470 nm liegen, insbesondere in einem Bereich von 355 nm bis 375 nm, in einem Bereich von 390 nm und 410 nm bzw. einem Bereich von 450 nm und 470 nm. Die konkret verwendete Wellenlänge hängt dabei insbesondere von der härtbaren Masse ab.

Gemäß einer Variante kann die Wellenlänge des von der Bestrahlungseinheit abgegebenen Lichts während der Bestrahlung variieren. Hierbei kann die Wellenlänge stufenweise verstellt werden, insbesondere zwischen den oben genannten Bereichen. Auch kann ein kontinuierlicher Übergang der verwendeten Wellenlänge vorgesehen sein.

Gemäß einem Aspekt ist das Material, aus dem der Kanal gebildet ist, für die eingesetzte Strahlung zumindest teilweise transluzent. Beispielsweise absorbiert das Material des Kanals bei einem Bestrahlungsvorgang weniger als 50% der Strahlung. Auf diese Weise ist die härtbare Masse während der Dosierung einer ausreichend hohen Strahlung ausgesetzt und es kann eine homogene Bestrahlung der im Kanal befindlichen Masse erfolgen.

Dasselbe gilt für die Hülse, die den Kanal umgibt.

Die Halterung hält gemäß einer Ausführungsform zumindest ein erstes Dichtungsmittel zur zumindest einseitigen Abdichtung des Spalts zwischen Kanal und Hülse. Dadurch kann im Fall einer Entzündung der härtbaren Masse kein Sauerstoff in den Spalt zwischen Kanal und Hülse nachgezogen werden, sodass eine Flamme zuverlässig erstickt wird.

Insbesondere ist der Spalt einseitig von unten mit dem zumindest einen ersten Dichtungsmittel abgedichtet, sodass von unten durch den Spalt zwischen Kanal und Hülse kein Sauerstoff nachgezogen werden kann.

Beispielsweise können auch zwei Dichtungsmittel vorhanden sein, welche den Spalt an zwei Seiten der Hülse bzw. des Kanals abdichten.

Die Dichtungsmittel sind insbesondere als O-Ringe ausgebildet.

Die Vorrichtung kann ein Gestell umfassen, an dem die Halterung, die Dosiereinheit und/oder die Bestrahlungseinheit gelagert ist. Dadurch lassen sich die verschiedenen Komponenten in einer definierten Position relativ zueinander montieren.

Die Vorrichtung kann eine thermisch leitfähige Kopplung zur Koppelung mit einem Maschinenbett aufweisen, welche durch eine mechanische Verbindung und/oder eine thermisch leitfähige Masse gebildet ist. Die über die Halterung abgeleitete Wärme wird dadurch an das Maschinenbett abgegeben, sodass die Wärme noch besser an die Umgebung abgegeben werden kann.

Die Aufgabe wird des Weiteren erfindungsgemäß gelöst durch die Verwendung der erfindungsgemäßen Vorrichtung mit einer polymerisierbaren Masse, die aus der Gruppe der kationisch, radikalisch und/oder durch Feuchtigkeit polymerisierbaren Massen ausgewählt ist. Geeignete kationisch polymerisierbare Massen sind beispielsweise aus der DE 10 2018 131 513 A1 bekannt. Beispielsweise sind voraktivierbare Massen, die durch Feuchteeinwirkung aushärten, aus der WO 2017/220283 A1 bekannt.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 eine erfindungsgemäße Vorrichtung zum Voraktivieren und Dosieren einer aktinisch härtbaren Masse in einer Explosionsdarstellung,
- Figur 2 eine Teilbaugruppe der Vorrichtung aus Figur 1, die ein Gestell umfasst,
- Figur 3 eine weitere Teilbaugruppe der Vorrichtung aus Figur 1, die einen Kanal zum Führen einer härtbaren Masse zu einer Austrittsdüse umfasst,
- Figur 4 die Teilbaugruppe aus Figur 3 in einer Schnittdarstellung entlang der Linie A-A in Figur 3, und
- Figur 5 die Teilbaugruppe aus Figur 3 in einer Explosionsdarstellung.

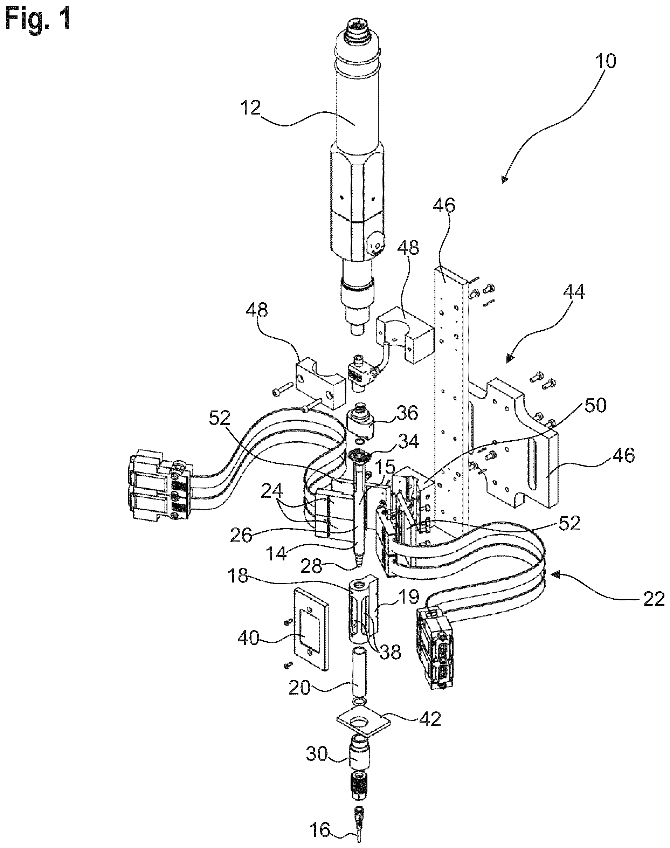

Figur 1 Vorrichtung 10 zum Voraktivieren und Dosieren einer aktinisch härtbaren Masse.

Die härtbare Masse ist beispielsweise eine polymerisierbare Masse, insbesondere eine polymerisierbare Masse, die aus der Gruppe der kationisch, radikalisch und/oder durch Feuchtigkeit polymerisierbaren Massen ausgewählt worden ist.

Die Vorrichtung 10 ist beispielsweise eine Applikationsvorrichtung, mit der die härtbare Masse auf ein Bauelement aufgebracht werden kann, um das Bauelement zu beschichten oder einzukapseln.

Die Vorrichtung 10 umfasst eine Dosiereinheit 12 zum Einstellen eines Volumenstroms der härtbaren Masse.

Die Dosierung kann mittels einer Exzenterschneckenpumpe, einer Kolbenpumpe oder durch eine Druck-Zeit-Dosierung erfolgen.

Eine Durchflussrate liegt beispielsweise zwischen 0,01 ml/min und 60 ml/min.

Des Weiteren hat die Vorrichtung 10 einen Kanal 14 zum Führen der härtbaren Masse zu einer Austrittsdüse 16.

Die Dosiereinheit 12 ist mit dem Kanal 14 strömungstechnisch verbunden, um dem Kanal 14 die härtbare Masse zuzuführen. Insofern schließt der Kanal 14 in Strömungsrichtung der härtbaren Masse an die Dosiereinheit 12 an.

Der Kanal 14 ist in einer thermisch leitfähigen Halterung 18 gehalten, die den Kanal 14 umfangsmäßig umgibt.

Die Halterung 18 ist in der gezeigten Ausführungsform im Wesentlichen zylinderförmig, wobei an einer Außenseite der Halterung 18 ein in Längsrichtung der Halterung 18 verlaufender Steg 19 angeformt ist. Der Steg 19 dient zur Ausrichtung und Befestigung der Halterung 18, beispielsweise mittels Verbindungsmitteln wie Schrauben.

Die thermisch leitfähige Halterung 18 dient insbesondere als Kühlkörper, um Wärme möglichst schnell vom Kanal 14 abzuleiten. Die Halterung 18 ist hierzu aus einem Material gebildet, das eine gute thermische Leitfähigkeit aufweist, sodass die Halterung 18 als (indirekte) Kühlung verwendet werden kann, wie nachfolgend noch beschrieben wird.

Die Vorrichtung 10 umfasst außerdem eine Hülse 20, die den Kanal 14 in einem Längsabschnitt ebenfalls umfangsmäßig umgibt.

Zudem ist eine Bestrahlungseinheit 22 vorgesehen, die im Betrieb der Vorrichtung 10 aktinische Strahlung zum Voraktivieren der aktinisch härtbaren Masse ausstrahlt.

Beispielsweise ist die Bestrahlungseinheit 22 eingerichtet, Licht mit einer Wellenlänge im Bereich von 200 nm bis 1200 nm abzugeben.

Die Bestrahlungseinheit 22 lässt sich sowohl in montiertem Zustand als auch in ausgebautem Zustand auf Ihre Intensität hin vermessen und justieren.

Die Bestrahlungseinheit 22 umfasst mehrere Leuchtköpfe 24, im Ausführungsbeispiel vier Leuchtköpfe 24, die paarweise in Umfangsrichtung des Kanals 14 verteilt sind.

Sowohl der Kanal 14 als auch die Hülse 20 sind zumindest teilweise strahlendurchlässig für die aktinische Strahlung der Bestrahlungseinheit 22.

Im Ausführungsbeispiel sind der Kanal 14 und die Hülse 20 vollständig aus einem für die aktinische Strahlung strahlendurchlässigen Material gebildet. Anders ausgedrückt bildet der Kanal 14 insgesamt einen strahlendurchlässigen Fensterabschnitt 15.

Es ist jedoch auch denkbar, dass der Kanal 14 und/oder die Hülse 20 jeweils nur bereichsweise durchlässig für die aktinische Strahlung sind, insbesondere einen oder mehrere strahlendurchlässige Fensterabschnitte 15 aufweisen.

Der Kanal 14 verläuft im Ausführungsbeispiel durch ein Rohr 26, das einen runden Querschnitt hat und sich an einem Ende zu einer Austrittsöffnung 28 hin verjüngt.

Die Bestrahlungseinheit 22 ist dem strahlendurchlässigen Fensterabschnitt bzw. einem strahlendurchlässigen Bereich des Kanals 14 zugeordnet.

Die Hülse 20 umgibt den Kanal 14 zumindest in dem Bereich, dem die Bestrahlungseinheit 22 zugeordnet ist.

Auch die Hülse 20 ist in der Halterung 18 gehalten und von dieser umfangsmäßig umgeben.

Um den Kanal 14 und die Hülse 20 in der Halterung 18 zu halten, ist an einem unteren Ende der Halterung 18 eine Mutter 30 eingeschraubt, welche den Kanal 14 und die Hülse 20 abstützt und gegen Herausrutschen sichert.

Die Mutter 30 kann aus demselben Material gebildet sein wie die Halterung 18.

Der Kanal 14 ist in der Vorrichtung 10 austauschbar befestigt. Zu diesem Zweck hat der Kanal 14 an einem Ende, das der Dosiereinheit 12 zugewandt ist, eine Verbindungsgeometrie 34, die über ein Verbindungsstück 36 mit der Dosiereinheit 12 gekoppelt ist.

Die Verbindungsgeometrie 34 bildet mit dem Verbindungsstück 36 beispielsweise einen Bajonettverschluss.

Die Halterung 18 hat im Ausführungsbeispiel drei strahlendurchlässige Fenster 38. Die drei strahlendurchlässige Fenster 38 sind dabei derart angeordnet, dass zwei strahlendurchlässige Fenster 38 in Bezug auf ein zentrales strahlendurchlässiges Fenster 38 derart angeordnet sind, dass sie beide den gleichen Abstand zum zentralen strahlendurchlässiges Fenster 38 entlang des Umfangs Hülse 20 aufweisen.

Anders ausgedrückt sind die drei strahlendurchlässige Fenster 38 sowie der Steg 19 jeweils äquidistant zueinander entlang des Umfangs der Hülse 20 angeordnet.

Die strahlendurchlässigen Fenster 38 sind durch Langlöcher in der Halterung 18 gebildet. Es sind jedoch auch anders geformte Aussparungen möglich.

Entscheidend ist, dass eine Größe und Geometrie der Fenster 38 an die Bestrahlungseinheit 22, insbesondere die Leuchtköpfe 24 angepasst ist.

Zwei der Fenster 38 sind der Bestrahlungseinheit 22 zugeordnet, sodass die Bestrahlungseinheit 22 den Kanal 14 bzw. die darin befindliche Masse durch die Fenster 38 hindurch bestrahlen kann.

Ein weiteres Fenster 38, insbesondere das zentrale strahlendurchlässige Fenster 38, dient als Sichtfenster und ermöglicht einen Blick auf den Kanal 14. Dem Sichtfenster ist eine UV-Schutzabdeckung 40 zugeordnet.

Unterhalb der Halterung 18 ist eine weitere UV-Schutzabdeckung 42 angeordnet.

Die Vorrichtung 10 umfasst außerdem ein Gestell 44, an dem die Halterung 18, die Dosiereinheit 12 und die Bestrahlungseinheit 22 gelagert sind.

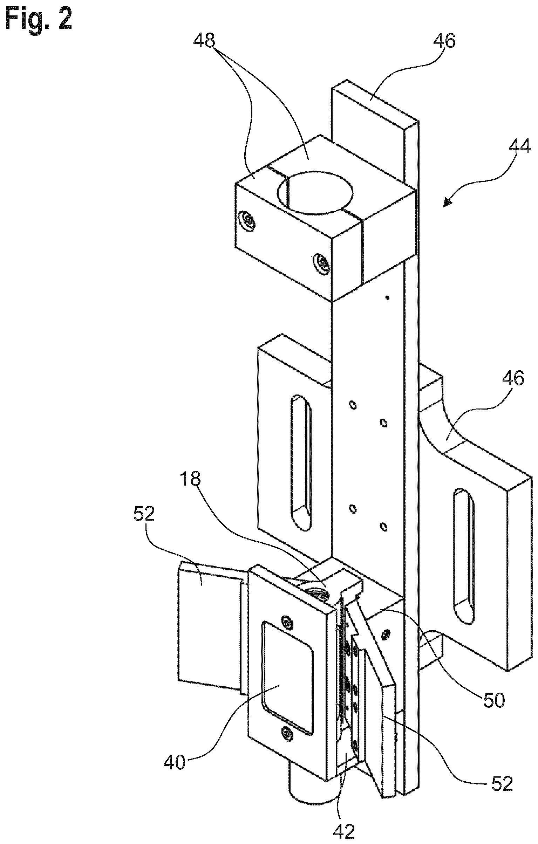

Das Gestell 44, das zusammen mit der Halterung 18 und den UV-Schutzabdeckungen 40, 42 in Figur 2 dargestellt ist, ist mehrteilig ausgebildet.

Genauer gesagt umfasst das Gestell 44 mehrere Befestigungsplatten 46.

Zur Befestigung der Dosiereinheit 12 sind zwei Klemmelemente 48 vorgesehen, zwischen denen die Dosiereinheit 12 gehalten ist und die wiederum an einer der Befestigungsplatten 46 befestigt sind.

Des Weiteren umfasst das Gestell 44 ein Aufnahmeelement 50, an dem die Halterung 18 gehalten und ausgerichtet ist.

Zusätzlich sind an dem Aufnahmeelement 50 zwei Fixierplatten 52 zur Befestigung der Leuchtköpfe 24 der Bestrahlungseinheit 22 befestigt.

Das Aufnahmeelement 50 ist ebenfalls an einer Befestigungsplatte 46 befestigt.

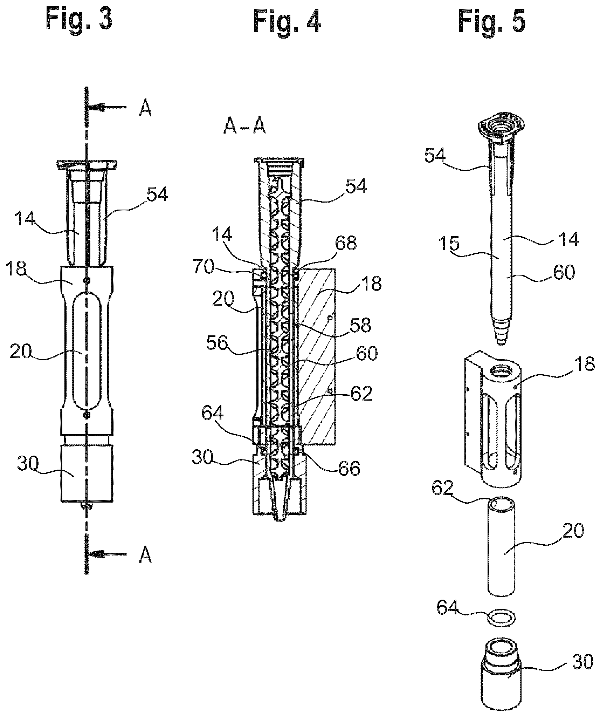

Die Figuren 3 bis 5 zeigen jeweils eine Teilbaugruppe der Vorrichtung 10, welche den Kanal 14, die Halterung 18 und die Hülse 20 umfasst.

Der Kanal 14 ist länger als die Halterung 18 und die Hülse 20 und hat an seiner Außenseite Positionierungsmittel 54 in Form von angeformten Rippen.

Durch die Positionierungsmittel 54 ist festgelegt, wie weit der Kanal 14 in die Halterung 18 eingeschoben werden kann. Hierdurch kann sichergestellt werden, dass der Kanal 14 in Bezug auf die strahlendurchlässige Fenster 38 der Halterung 18 ausgerichtet ist, insbesondere in dem Fall, wenn der Kanal 14 selbst strahlendurchlässige Fensterabschnitte hat, die mit den strahlendurchlässigen Fenster 38 der Halterung 18 fluchten sollen.

In der Schnittdarstellung in Figur 4 ist zu erkennen, dass in dem Kanal 14 eine Mischvorrichtung 56 angeordnet ist.

Die Mischvorrichtung 56 dient dazu, die härtbare Masse umzuwälzen.

Des Weiteren ist in Figur 4 zu erkennen, dass zwischen der Hülse 20 und dem Kanal 14 ein Spalt 58 gebildet ist.

Der Spalt 58 ist zwischen einer Außenwandung 60 des Kanals 14 und einer Innenwandung 62 der Hülse 20 gebildet.

Der Spalt 58 ist kleiner als 1,0 mm, insbesondere kleiner als 0,2 mm, insbesondere dann, wenn die Vorrichtung 10 nicht in Betrieb ist und der Kanal 14 Umgebungstemperatur hat.

Wenn der Kanal 14 bestrahlt wird, erfährt dieser aufgrund der aktinischen Strahlung der Bestrahlungseinheit 22 eine derartige thermische Ausdehnung, dass der Kanal 14 zumindest teilweise formschlüssig und/oder kraftschlüssig mit der Hülse 20 zusammenwirkt, insbesondere an dessen Innenseite zumindest teilweise anliegt.

Im Ausführungsbeispiel sind sowohl die Hülse 20 als auch der Kanal 14 kreiszylindrisch ausgebildet, sodass der Spalt 58 ringförmig ist. Insofern legt sich der Kanal 14 bei einer thermischen Ausdehnung kraft- und formschlüssig an die Innenwandung 62 der Hülse 20 an, wodurch der Spalt 58 verschwindet. Der Spalt 58 dient somit sowohl zum Toleranzausgleich als auch als Ausdehnungsvolumen für den Kanal 14.

Gemäß einer alternativen Ausführungsform, die in den Figuren der Einfachheit halber nicht dargestellt ist, kann der Kanal 14 einen eckigen Querschnitt und die Hülse 20 einen runden Querschnitt haben oder umgekehrt. Hierdurch würde sich dann beispielsweise zumindest ein Linienkontakt zwischen dem Kanal 14 und der Hülse 20 ergeben, insbesondere mehrere Linienkontakte und/oder Flächenkontakte.

Weiter alternativ ist denkbar, dass die Hülse 20 und der Kanal 14 unterschiedlich rund sind, also zum Beispiel, dass die Hülse 20 einen kreisrunden Querschnitt hat und der Kanal 14 einen ovalen Querschnitt. Der Kanal 14 liegt dann bei einer thermischen Ausdehnung im Bereich der Hülse 20 nicht vollflächig an der Innenwandung 62 der Hülse 20 an, sondern nur abschnittsweise. Auf diese Weise kann Wärme gezielt in den Bereichen abgeleitet werden, in denen die Halterung 18 keine Fenster 38 hat und eine gute Wärmeübertragung sicherstellt.

Durch das geringe Volumen des Spalts 58 stellt dieser insbesondere eine Sicherheitseinrichtung für den Fall dar, dass sich die härtbare Masse trotz der hohen thermischen Leitfähigkeit der Halterung 18 selbst entzünden würde. Konkret wird eine möglicherweise entstehende Flamme rechtzeitig erstickt, insbesondere bevor die Flamme auftritt.

Die Halterung 18 hält zumindest ein erstes Dichtungsmittel 64 zur Abdichtung des Spalts 58 zwischen Kanal 14 und Hülse 20.

Das erste Dichtungsmittel 64 dichtet ein unteres Ende des Spalts 58 ab.

Im Ausführungsbeispiel ist das erste Dichtungsmittel 64 in einer ersten Nut 66 der Mutter 30 aufgenommen. Somit lässt sich das erste Dichtungsmittel 64 leicht vormontieren und ist bei der Montage gegen Verrutschen gesichert.

Ein zweites Dichtungsmittel 68 ist in einer zweiten Nut 70 der Halterung 18 aufgenommen und dichtet ein oberes Ende des Spalts 58 ab. Dieses zweite Dichtungsmittel 68 kann jedoch optional entfallen.

Das erste Dichtungsmittel 64 und das zweite Dichtungsmittel 68 sind als O-Ringe ausgebildet.

Das erste Dichtungsmittel 64 und das zweite Dichtungsmittel 68 tragen dazu bei, dass eine möglicherweise auftretende Flamme erstickt wird. Insbesondere das untere, in der Mutter 30 aufgenommene erste Dichtungsmittel 64 trägt entscheidend dazu bei, dass kein Sauerstoff in den Spalt 58 nachgezogen wird und der sogenannte Kamineffekt verhindert wird.

Um eine Wärmeableitung zusätzlich zu verbessern, kann die Vorrichtung eine thermisch leitfähige Kopplung zur Koppelung mit einem (hier nicht dargestellten) Maschinenbett aufweisen, welche durch eine mechanische Verbindung und/oder eine thermisch leitfähige Masse gebildet ist. Beispielsweise stellt das Gestell 44 eine derartige mechanische Koppelung dar. Eine thermisch leitfähige Masse ist der Einfachheit halber nicht dargestellt.

## Patentansprüche

1. Vorrichtung (10) zum Voraktivieren und Dosieren einer aktinisch härtbaren Masse, insbesondere einer polymerisierbaren Masse, mit
einer Dosiereinheit (12) zum Einstellen eines Volumenstroms der härtbaren Masse,
einem Kanal (14) zum Führen der härtbaren Masse zu einer Austrittsdüse (16), und
einer Bestrahlungseinheit (22), die aktinische Strahlung zum Voraktivieren der aktinisch härtbaren Masse ausstrahlt,
wobei der Kanal (14) zumindest in einem Fensterabschnitt (15) strahlendurchlässig für die aktinische Strahlung der Bestrahlungseinheit (22) ist,
wobei die Bestrahlungseinheit (22) dem strahlendurchlässigen Fensterabschnitt (15) des Kanals (14) zugeordnet ist, und
wobei die Vorrichtung (10) eine Hülse (20) aufweist, die ebenfalls zumindest teilweise aus einem strahlendurchlässigen Material für die aktinische Strahlung gebildet ist und den Kanal (14) zumindest in dem Bereich umgibt, dem die Bestrahlungseinheit (22) zugeordnet ist, und
wobei die Vorrichtung (10) eine thermisch leitfähige Halterung (18) aufweist, in welcher der Kanal (14) und die Hülse (20) gehalten sind, wobei die thermisch leitfähige Halterung (18) den Kanal (14) und die Hülse (20) umfangsmäßig umgibt und mindestens ein strahlendurchlässiges Fenster (38) hat, das der Bestrahlungseinheit (22) zugeordnet ist.

2. Vorrichtung (10) nach Anspruch 1, **dadurch gekennzeichnet, dass** in dem Kanal (14) eine Mischvorrichtung (56) angeordnet ist, die ausgebildet ist, die härtbare Masse im Kanal (14) umzuwälzen.

3. Vorrichtung (10) nach einem der vorhergehenden Ansprüche, **dadurch gekennzeichnet, dass** zwischen der Hülse (20) und dem Kanal (14) ein Spalt (58) gebildet ist.

4. Vorrichtung (10) nach Anspruch 3, **dadurch gekennzeichnet, dass** der Spalt (58) zwischen einer Außenwandung (60) des Kanals (14) und einer Innenwandung (62) der Hülse (20) kleiner als 1,0 mm ist, insbesondere kleiner als 0,2 mm.

5. Vorrichtung (10) nach einem der vorhergehenden Ansprüche, **dadurch gekennzeichnet, dass** der Kanal (14) aus einem Material gebildet ist, welches aufgrund der aktinischen Strahlung der Bestrahlungseinheit (22) eine derartige thermische Ausdehnung erfährt, dass der Kanal (14) zumindest teilweise formschlüssig und/oder kraftschlüssig mit der Hülse (20) zusammenwirkt.

6. Vorrichtung (10) nach einem der vorhergehenden Ansprüche, **dadurch gekennzeichnet, dass** die Bestrahlungseinheit (22) eingerichtet ist, Licht mit einer Wellenlänge im Bereich von 200 nm bis 1200 nm abzugeben.

7. Vorrichtung (10) nach einem der vorhergehenden Ansprüche, **dadurch gekennzeichnet, dass** die Halterung (18) zumindest ein erstes Dichtungsmittel (64) zur zumindest einseitigen Abdichtung des Spalts (58) zwischen Kanal (14) und Hülse (20) hält.

8. Vorrichtung (10) nach einem der vorhergehenden Ansprüche, **dadurch gekennzeichnet, dass** die Vorrichtung (10) ein Gestell (44) umfasst, an dem die Halterung (18), die Dosiereinheit (12) und/oder die Bestrahlungseinheit (22) gelagert ist.

9. Vorrichtung (10) nach einem der vorhergehenden Ansprüche, **dadurch gekennzeichnet, dass** die Vorrichtung (10) eine thermisch leitfähige Kopplung zur Koppelung mit einem Maschinenbett aufweist, welche durch eine mechanische Verbindung und/oder eine thermisch leitfähige Masse gebildet ist.

10. Verwendung der Vorrichtung (10) nach einem der vorhergehenden Ansprüche mit einer polymerisierbaren Masse, die aus der Gruppe der kationisch, radikalisch und/oder durch Feuchtigkeit polymerisierbaren Massen ausgewählt ist.

## Claims

1. A device (10) for preactivating and dosing an actinically curable compound, in particular a polymerizable compound, comprising
a dosing unit (12) for adjusting a volume flow of the curable compound,
a channel (14) for guiding the curable compound to an outlet nozzle (16), and an irradiation unit (22) which emits actinic radiation for preactivating the actinically curable compound,
wherein the channel (14) is radiotransparent to the actinic radiation of the irradiation unit (22) at least in a window section (15),
wherein the irradiation unit (22) is assigned to the radiotransparent window section (15) of the channel (14), and
wherein the device (10) has a sleeve (20) which is also at least partially made of a radiotransparent material to the actinic radiation and surrounds the channel (14) at least in the area to which the irradiation unit (22) is assigned, and
wherein the device (10) has a thermally conductive holder (18) in which the channel (14) and the sleeve (20) are held, wherein the thermally conductive holder (18) circumferentially surrounds the channel (14) and the sleeve (20) and has at least one radiotransparent window (38) which is assigned to the irradiation unit (22).

2. The device (10) according to claim 1, **characterized in that** a mixing device (56) is arranged in the channel (14), which is configured to circulate the curable compound in the channel (14).

3. The device (10) according to any of the preceding claims, **characterized in that** a gap (58) is formed between the sleeve (20) and the channel (14).

4. The device (10) according to claim 3, **characterized in that** the gap (58) between an outer wall (60) of the channel (14) and an inner wall (62) of the sleeve (20) is smaller than 1.0 mm, in particular smaller than 0.2 mm.

5. The device (10) according to any of the preceding claims, **characterized in that** the channel (14) is made of a material which due to the actinic radiation of the irradiation unit (22), undergoes such a thermal expansion that the channel (14) cooperates at least partially in a positive and/or nonpositive manner with the sleeve (20).

6. The device (10) according to any of the preceding claims, **characterized in that** the irradiation unit (22) is set up to emit light having a wavelength in the range of 200 nm to 1200 nm.

7. The device (10) according to any of the preceding claims, **characterized in that** the holder (18) holds at least a first sealing means (64) for sealing at least one side of the gap (58) between the channel (14) and the sleeve (20).

8. The device (10) according to any of the preceding claims, **characterized in that** the device (10) comprises a frame (44) on which the holder (18), the dosing unit (12) and/or the irradiation unit (22) are/is mounted.

9. The device (10) according to any of the preceding claims, **characterized in that** the device (10) has a thermally conductive coupling for the coupling to a machine bed, which is formed by a mechanical connection and/or a thermally conductive compound.

10. Use of the device (10) according to any of the preceding claims with a polymerizable compound which is selected from the group consisting of compounds which are polymerizable cationically, radically and/or by moisture.

## Revendications

1. Dispositif (10) de pré-activation et de dosage d'une masse durcissable par voie actinique, en particulier d'une masse polymérisable, comprenant
une unité de dosage (12) pour le réglage d'un flux volumétrique de la masse durcissable,
un canal (14) pour le transport de la masse durcissable vers une buse de sortie (16), et
une unité d'irradiation (22) qui émet un rayonnement actinique pour pré-activer la masse durcissable par voie actinique,
le canal (14) étant transparent au rayonnement pour le rayonnement actinique de l'unité d'irradiation (22) au moins dans une partie de fenêtre (15),
l'unité d'irradiation (22) étant associée à la partie de fenêtre (15) du canal (14) qui est transparente au rayonnement, et
le dispositif (10) présentant un manchon (20) qui est également au moins partiellement réalisé en un matériau transparent au rayonnement pour le rayonnement actinique et qui entoure le canal (14) au moins dans la zone à laquelle l'unité d'irradiation (22) est associée, et
le dispositif (10) présentant un support thermiquement conducteur (18) dans lequel le canal (14) et le manchon (20) sont maintenus, le support thermiquement conducteur (18) entourant le canal (14) et le manchon (20) de manière circonférentielle et présentant au moins une fenêtre (38) transparente au rayonnement qui est associée à l'unité d'irradiation (22).

2. Dispositif (10) selon la revendication 1, **caractérisé en ce qu'**un dispositif de mélange (56) réalisé de manière à faire circuler la masse durcissable dans le canal (14) est agencé dans le canal (14).

3. Dispositif (10) selon l'une des revendications précédentes, **caractérisé en ce qu'**une fente (58) est formée entre le manchon (20) et le canal (14).

4. Dispositif (10) selon la revendication 3, **caractérisé en ce que** la fente (58) entre une paroi extérieure (60) du canal (14) et une paroi intérieure (62) du manchon (20) est inférieure à 1,0 mm, en particulier inférieure à 0,2 mm.

5. Dispositif (10) selon l'une des revendications précédentes, **caractérisé en ce que** le canal (14) est réalisé en un matériau qui, sous l'effet du rayonnement actinique de l'unité d'irradiation (22), subit une dilatation thermique telle que le canal (14) coopère au moins partiellement par coopération de formes et/ou par coopération de forces avec le manchon (20).

6. Dispositif (10) selon l'une des revendications précédentes, **caractérisé en ce que** l'unité d'irradiation (22) est aménagée de manière à émettre de la lumière à longueur d'onde dans la plage comprise entre 200 nm et 1200 nm.

7. Dispositif (10) selon l'une des revendications précédentes, **caractérisé en ce que** le support (18) retient au moins un premier moyen d'étanchéité (64) pour l'étanchement au moins d'un côté de la fente (58) entre le canal (14) et le manchon (20).

8. Dispositif (10) selon l'une des revendications précédentes, **caractérisé en ce que** le dispositif (10) comprend un bâti (44) sur lequel sont montés le support (18), l'unité de dosage (12) et/ou l'unité d'irradiation (22).

9. Dispositif (10) selon l'une des revendications précédentes, **caractérisé en ce que** le dispositif (10) présente un couplage thermiquement conducteur pour le couplage avec un socle de machine, qui est formé par une liaison mécanique et/ou une masse thermiquement conductrice.

10. Utilisation du dispositif (10) selon l'une des revendications précédentes avec une masse polymérisable choisie dans le groupe des masses polymérisables par voie cationique, radicalaire et/ou par humidité.
